(19) Europäisches Patentamt / European Patent Office / Office européen des brevets

(11) **EP 3 316 212 A1**

(12) **EUROPEAN PATENT APPLICATION**

(43) Date of publication:
02.05.2018 Bulletin 2018/18

(51) Int Cl.:
***G06T 5/00*** (2006.01)

(21) Application number: 16306425.6

(22) Date of filing: 28.10.2016

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LEBRUN, Marc**
35576 Cesson-Sévigné (FR)
• **CRIVELLI, Tomas Enrique**
35576 Cesson-Sévigné (FR)
• **HELLIER, Pierre**
35576 Cesson-Sévigné (FR)

(74) Representative: **Huchet, Anne**
**TECHNICOLOR**
**1-5, rue Jeanne d'Arc**
**92130 Issy-les-Moulineaux (FR)**

(54) **METHOD FOR DEBLURRING A VIDEO, CORRESPONDING DEVICE AND COMPUTER PROGRAM PRODUCT**

(57)     A method and a device for deblurring a frame (FC) of a video are provided, the video comprising a plurality of frames (F0... FX). The method and the device comprise the sufficient resources for:
- Obtaining (10), from the plurality of frames (F0... FX), a set of neighboring frames of the current frame wherein a global score of sharpness is greater than a predetermined sharpness threshold, called set of selected frames (FS0... FSX);
- for at least one of the frames of the set of selected frames (FS0,.. FSX) and for the current frame (FC), generating (20) of a local blur map, delivering a local blur map of the at least one frame (LBM FS0... LBM FSX) and a local blur map of the current frame (LBMFC);
- performing (30) a local warping of the at least one frame of the set of selected frames (FS0,.. FSX) and of the local blur map (LBM FS0... LBM FSX) associated with the at least one frame as a function of a local motion estimation between the current frame (FC) and the at least one frame of the set of selected frames (FS0,.. FSX), delivering at least one locally warped frame (LWFS0,... LWFSX) and an associated locally warped blur map (LWBM FS0... LWBM FSX);
- performing (40) a weighted aggregation of a part of the at least one locally warped frame (LWFS0,... LWFSX) and a corresponding part the current frame (FC), based on the at least one locally warped blur map and the local blur map of the current frame (LBMFC).

Figure 7

**Description**

**1. Technical field**

The present disclosure relates to the field of video processing. More specifically, the present disclosure relates to deblurring of video. More particularly, the methods and devices proposed in the present disclosure are adapted for deblurring User Generated Content (UGC) videos such as hand-held cameras videos.

**2. Background**

The present section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Videos captured by cameras often contain significant camera shake, causing some frames to be blurry. This is more specifically the case of hand-held camera video and user generated content videos. Thus, the blur is a main issue of low-quality UGC when displayed on a good screen. UGC is usually captured by smartphones or sportcams. A good screen is for example a 4K tv screen.

Several techniques have already been investigated for deblurring such videos contents: using correspondence image, using sharp regions of close frames.

For example, deblurring by example using correspondence proposes to deblur an image thanks to a look-a-like reference sharp image. The main idea of this prior art technique is to estimate a blur kernel, and apply blind-deconvolution. The main problem of this method is that it leads to typical artifacts of deconvolution. Additionally, the blur kernel estimation is roughly-local (the image is for example divided in 3x4 tiles), and the blur variation among the image is forced to be smooth.

Another technique consists in selecting sharp regions in the video, and using these regions to restore blurry regions of the same content in nearby frames. This method is for example described in article "Video Deblurring for Hand-held Cameras Using Patch-based Synthesis". However this technique mainly works for hand-shaking blur, since it implements only an estimate of a parametric, homography-based motion for each frame as an approximation to the real motion. Even though this technique does not apply a deconvolution, it is needed to locally estimate the blur in order to look for similar patches between the blurry patch, and the sharp region, convolved with the estimated blur. Another problem is that a patch-based texture synthesis approach is used to copy the estimated deblurred pixels into the result frame.

**3. Summary**

The proposed technique allows reducing prior art drawbacks. More specifically, the proposed technique does not need extensive calculation.

One embodiment of the described general aspects is a method for deblurring a frame (FC) of a video, the video comprising a plurality of frames (F0... FX). The method comprises obtaining (10), from the plurality of frames (F0... FX), a set of neighboring frames of the current frame wherein a global score of sharpness is greater than a predetermined sharpness threshold, called set of selected frames (FS0... FSX). The method further comprises, for at least one of the frames of the set of selected frames (FS0,.. FSX) and for the current frame (FC), generating (20) of a local blur map, delivering a local blur map of the at least one frame (LBM FS0... LBM FSX) and a local blur map of the current frame (LBMFC) and further comprises performing (30) a local warping of the at least one frame of the set of selected frames (FS0,.. FSX) and of the local blur map (LBM FS0... LBM FSX) associated with the at least one frame as a function of a local motion estimation between the current frame (FC) and the at least one frame of the set of selected frames (FS0,... FSX), delivering at least one locally warped frame (LWFS0,.. LWFSX) and an associated locally warped blur map (LWBM FS0... LWBM FSX). The method further comprises performing (40) a weighted aggregation of a part of the at least one locally warped frame (LWFS0,.. LWFSX) and a corresponding part the current frame (FC), based on the at least one locally warped blur map and the local blur map of the current frame (LBMFC).

Another embodiment of the described general aspects is an apparatus for deblurring a frame (FC) of a video, the video comprising a plurality of frames (F0... FX), said apparatus comprising at least one processor and memory, wherein the at least one processor is configured to:

obtain (10), from the plurality of frames (F0... FX), a set of neighboring frames of the current frame wherein a global score of sharpness is greater than a predetermined sharpness threshold, called set of selected frames (FS0... FSX);

for at least one of the frames of the set of selected frames (FS0,... FSX) and for the current frame (FC), generate (20) of a local blur map, delivering a local blur map of the at least one frame (LBM FS0... LBM FSX) and a local blur map of the current frame (LBMFC); perform(30) a local warping of the at least one frame of the set of selected frames (FS0,... FSX) and of the local blur map (LBM FS0... LBM FSX) associated with the at least one frame as a function of a local motion estimation between the current frame (FC) and the at least one frame of the set of selected frames (FS0,... FSX), providing at least one locally warped frame (LWFS0,.. LWFSX) and an associated locally warped blur map (LWBM FS0... LWBM FSX); perform (40) a weighted aggregation of a part of the at least one locally warped frame (LWFS0,.. LWFSX) and a corresponding part the current frame (FC), based on the at least one locally warped blur map and the local blur map of the current frame (LBMFC).

A non-transitory processor readable medium having stored thereon such a deblurred video is also disclosed.

According to one implementation, the different steps of the method for deblurring a video as described here above are implemented by one or more software programs or software module programs comprising software instructions intended for execution by a data processor of an apparatus for deblurring a video, these software instructions being designed to command the execution of the different steps of the methods according to the present principles.

A computer program is also disclosed that is capable of being executed by a computer or by a data processor, this program comprising instructions to command the execution of the steps of a method for deblurring a video as mentioned here above.

This program can use any programming language whatsoever and be in the form of source code, object code or intermediate code between source code and object code, such as in a partially compiled form or any other desirable form whatsoever.

The information carrier can be any entity or apparatus whatsoever capable of storing the program. For example, the carrier can comprise a storage means such as a ROM, for example a CD ROM or a microelectronic circuit ROM or a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

4. Brief description of the drawings

- Figure 1 is a schematic block diagram illustrating the method for deblurring a frame of a video;
- figure 2 illustrates an example of the obtaining of the set of selected frames;
- figures 3 & 4 also illustrate the obtaining of the set of selected frames;
- Figures 5 shows the local warping and aggregation;
- Figure 6 illustrates an example of a deblurring device according to the general described aspects.

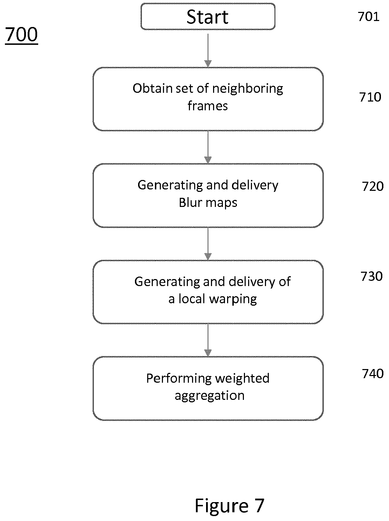

- Figure 7 illustrates one embodiment of a method according to the general described aspects.

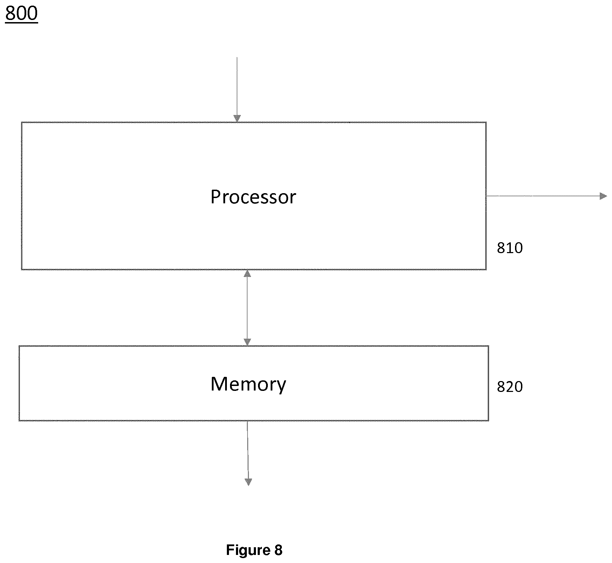

- Figure 8 illustrates one embodiment of an apparatus according to the general described aspects.

5. Description

5.1. General principle

According to the disclosure, a method for deblurring a frame of a video is proposed. The method may be used for every frame of a video, as long as the frame comprises blurred parts. This method uses several other frames of the video, which are closed to the frame to deblur, by extracting useful information from these frames and inserting a part of the useful information in current frame for realizing the deblurring. The frames from which the information is extracted are selected in view of a global index of sharpness, which avoid trying to obtain useful information from frames which are not sufficiently sharp. Once these globally sharp frames are extracted from the video, a specific calculation is done on these globally sharp frames. A key part of the disclosure is to realize local motion estimation between the globally sharp frames and the current frame, in order to realize a king of local resetting of the frames on the basis of the current frame.

Indeed, it is proposed a discrete evaluation of the motion between the current frame and a previous and or a next frame to ease and enhanced the obtaining of a patch, said patch being used to "deblur" a portion of the current frame. Thanks to the proposed technique, the frame is deblurred, in several locations, by using several patches which are constructed using the globally sharp frames. Thus, in the proposed method there is no model assumption about the frame or about the blur itself, and the deblurring is really local.

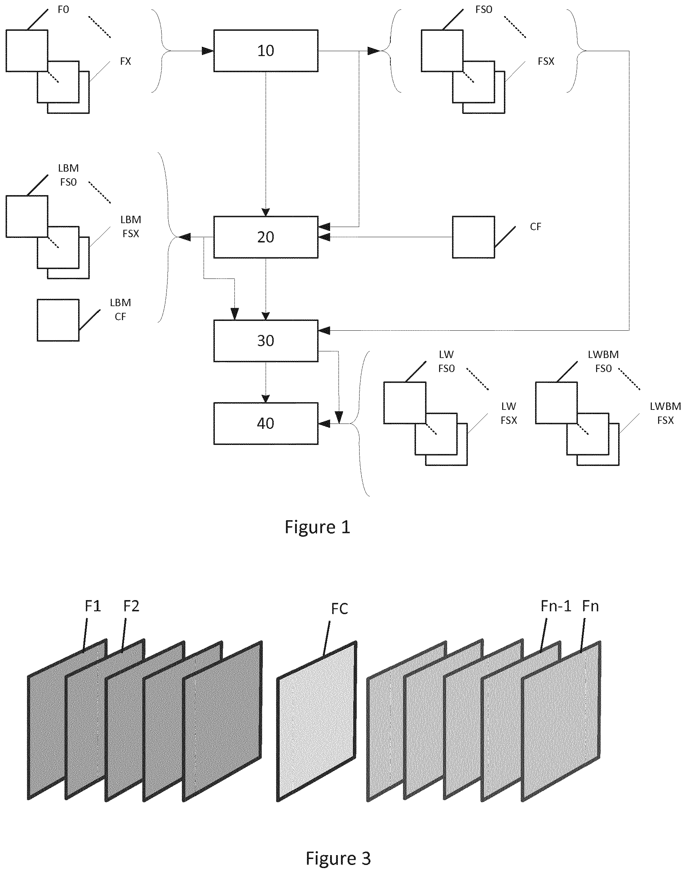

Figure 1 is a schematic block diagram illustrating the method for deblurring a frame (FC) of a video of the disclosure, the video comprising a plurality of frames (F0... FX). According to the disclosure the method comprises:

- obtaining (10), from the plurality of frames (F0... FX), a set of neighboring frames of the current frame wherein a global score of sharpness is greater than a predetermined sharpness threshold, called set of selected frames (FS0... FSX);
- for at least one of the frames of the set of selected frames (FS0... FSX) and for the current frame (FC), generating (20) of a local blur map, delivering a local blur map of the at least one frame (LBM FS0... LBM FSX) and a local blur map of the current frame (LBMFC);
  in a specific embodiment, the local blur map is calculated for each frame of the set of selected frames (FS0... FSX);
- performing (30) a local warping of the at least one frame of the set of selected frames (FS0... FSX) and of the local blur map (LBM FS0... LBM FSX) associated with the at least one frame as a function of a local motion estimation between the current frame (FC) and the at least one frame of the set of selected frames (FS0... FSX), delivering at least one locally warped frame (LWFS0... LWFSX) and an associated locally warped blur map (LWBM FS0... LWBM FSX);
- performing (40) a weighted aggregation of a part of the at least one locally warped frame (LWFS0... LWFSX) and a corresponding part the current frame (FC), based on the at least one locally warped blur map and the local blur map of the current frame (LBMFC).

Thus, the way the deblurring is done allows not only obtaining a sharp frame but also taking advantage of the best parts of the neighboring frames of the video to deblur specific portion of the current frames. This allows obtaining a deblurred frame with the information which is the most accurate in view of the blur of each part of the frame (to deblur) and in view of local motion of this part if view of the other frames. Since no global model is applied on the frame itself, the method allows tuning the deblurring in a more accurate way than prior art solutions, which are mainly based on global blur model. Several embodiments of the proposed method may be implemented.

For example, the way the set of selected frames is obtained may vary in view of the embodiments. In a first embodiment, some neighbor frames are preselected and a global index of sharpness is calculated on these preselected frames. This is explained in detail bellow. In another embodiment, some neighbor frames can be preselected in view of additional information attached to the frames. For example, additional information may be linked to the way the video has been shot. Indeed, user handheld devices such as a smartphone are often equipped with an accelerometer. The accelerometer records can be saved along with the video while the videoing is being shot. From the accelerometer records, one can estimate the movement of the device and therefore determine if a video frame is blurred or may be blur. This information may be used twice: the first use is to easily track the frames which need to be deblurred and the second use is not to use the blurred frames in the set of neighbor frames on which the global score of sharpness is calculated. The calculating resources of the handheld device are therefore saved.

In the following, a specific embodiment is disclosed.

5.2. Detailed description of a specific embodiment

5.2.1. Method for deblurring a video

A video is composed by a plurality of frames comprising picture elements. A video made by a handheld device has normally a frame rate from 25 to 30 frames per seconds. In other words, in a user generated video fragment, there are normally 25 to 30 frames. While taking the video, the handheld device is often in an unstable state due to the movement of the user who holds the device. Some frames may be blurred if the device was not motionless held, while some other frames may be less blur if the motion of the device is less intense. In the less blur frames, the picture elements may be identical or similar to the picture elements in the blur frames, in particular when the frames are neighbor frames in a short period of time (less than one second for example).

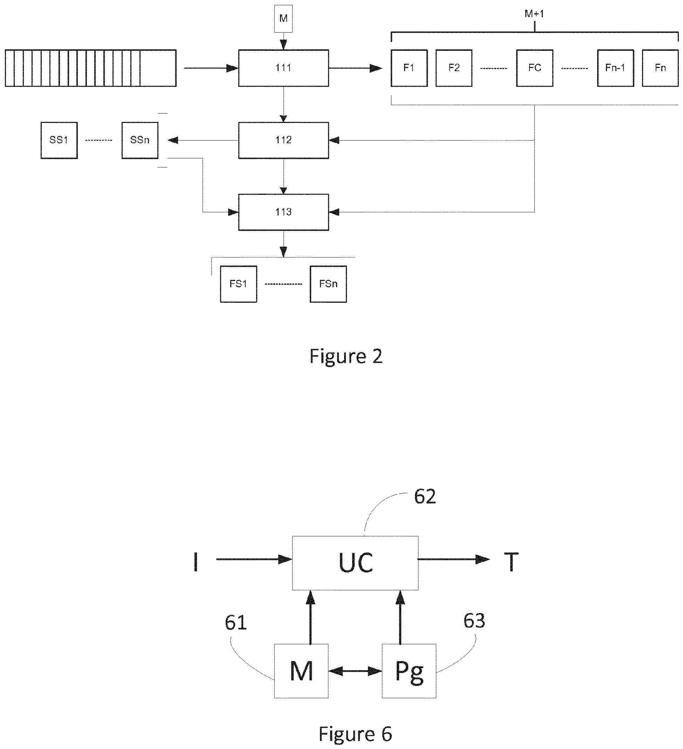

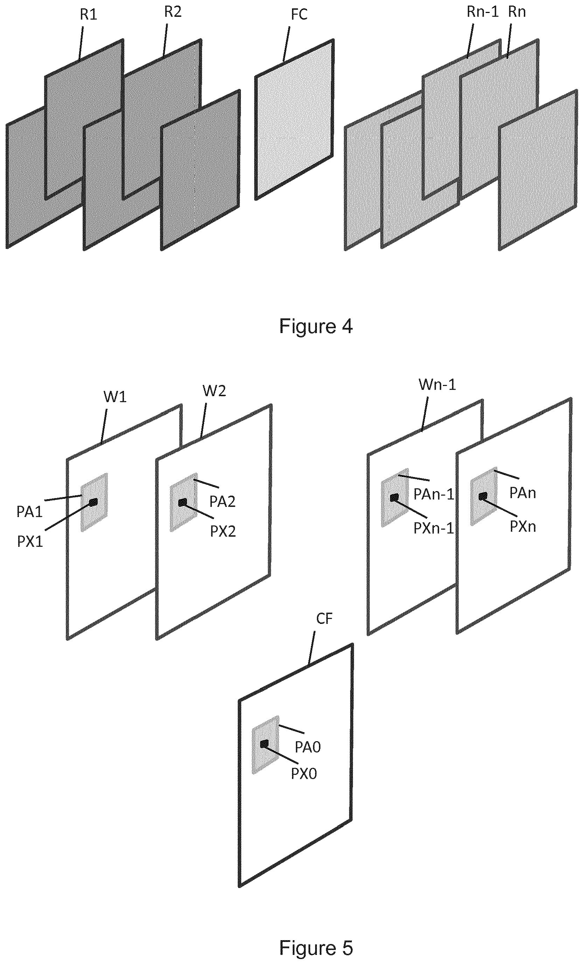

In this section, a specific embodiment of the invention for deblurring a frame of a video is disclosed in detail in relation with Figures 2 to 5. The method can be applied to deblurring a whole video by deblurring iteratively each frame of the video. The detailed steps for obtaining, from the plurality of frames, a set of neighboring frames of the current frame wherein a global score of sharpness is greater than a predetermined sharpness threshold, called set of selected frames are explained. In this embodiment, obtaining the set of selected frames comprises:

- Firstly, M neighbor frames of the current frame are obtained (111). M is a number greater or equal to one. In the embodiment, M is equal to 2N, N being a number greater or equal to one. The 2N neighbor frames F1...F2N of the current frame to be deblurred as well as the current frame FC are loaded. A preselected set of frames comprising 2N+1 frames is obtained. N is greater or equal to 1. In a proffered embodiment, 10 frames previous to the current frame and 10 frames next to the current frames are loaded. The duration of the video fragment is around one second is the frame rate is 25 to 30 frames per second.
- The second step is to calculate (112) a global score of sharpness (SS1 ... SSn) for the 2N+1 frames loaded in previous step according to a global bur measure method. The detailed computation of the method is provided in section §5.3.2. The calculated global scores of sharpness can be absolute scores or relative scores to the current frame.
- In the third step, a selection among the 2N+1 frames is carried out. In fact, some frames in the 2N+1 frames may be more blur (with a lower global scores of sharpness) than the current frame, and are not helpful for improving the current frame. The set of selected frames FS1...FSn is therefore obtained 113 by this step.

In this step, only the frames which are globally sharper than the current one can be kept. It is preferred to keep at least two sharpest frame. In another embodiment, a predetermined threshold value of global score of sharpness may be defined. This threshold value should be greater than the global score of sharpness of the current frame. The frames having global scores of sharpness higher than the threshold value can be kept. The quality and quantity of selected frames can therefore be adjusted by adjusting the threshold value. For example, when a deblurring device is of poor calculation capacity, the threshold value can be set as a relatively high value so as to reduce the quantity of selected frames.

In this embodiment, the use of a global blur measure method allows obtaining a general information which helps keeping or rejecting a neighbor frame of the current frame. A detail explanation of how this measure is obtained is detailed bellow. A key point is to use a method which does not need an important amount of resources, in order to keep resources for more resource consuming tasks. Once the set of selected frames is obtained, the local blur maps are calculated and the local warping is done. In this embodiment, the following steps are implemented:

- one computes a local blur measure over each of the selected sharper frames (i.e. the frames of the selected set of frames) and over the current frame. A local blur map is generated for each of the selected frames and for the current frame. A local blur map comprises blur measure of each pixel of a frame. Details of the computation are provided in section §5.2.3.
- an optional step may be implemented and consists in removing spurious and small activations in the local blur maps previously obtained. To his end, the local blur maps are filtered using a Total Variation Regularization. It should be noted that any regularization may be used (for example any method belonging to the edge-preserving category), as long as the transitions of the map are kept sharp.
- then, a local motion estimation is calculated between each kept neighbor frames and the current one. Then according to this motion estimation, the neighbor frames as well as their corresponding local blur maps are locally warped. The warped selected frames are denoted as LWFS1...LWFSn. Section §5.2.4 provides detailed operation for this computation. This warping algorithm may be replaced by any other one known in the art, providing that all pixels must be warped very accurately, such as there will be no ghost appearance during the aggregation of estimated patches. Therefore, no global model (such as homograph, affine or quadratic model used in Motion2D algorithm) shall be used.

Once the previous steps have been processed, one gets some kind of locally "resettled" frames. Since the motion estimation is done locally, no global motion model has been applied, so a precise sub motion (for a sub region or a portion of the frame) is use instead. Then the weighted aggregation of the current frame and the locally warped selected frames obtained can be processed. This is done by using the current frame, the warped selected frames, the local blur maps of the current frame and the warped local blur maps of the selected frames. This weighted aggregation delivers a deblurred current frame.

The weighted aggregation is carried out on the basis of the pixels of the frames. However, as explained herein above, a patch processing is done. That means that the calculations take into account the portion of the frame around the pixel, for obtaining better results. The size of the patch (i.e. the size of the portion) is parametrically defined. The deblurred current frame can be partially deblurred or totally deblurred. For a partially deblurred image, parts of its pixels result from the weighted aggregation. For a totally deblurred frame, all of its pixels result from the weighted aggregation.

The process for aggregating comprises:

- obtaining a current pixel in the current frame;
- obtaining a patch of a predetermined size around the current pixel;
- calculating the Euclidean distances between the patch in the current frame and the corresponding patches in the locally warped frame;
- calculating an average blur measure in a corresponding patch in the local blur map of the current frame and in the corresponding patch of the locally warped blur maps of the frames;
- aggregating the current pixel with weighted corresponding pixels in the locally warped frames as a function of the Euclidean distances of the patch and the average blur measure of the patch, delivering a deblurred pixel.

More specifically, in this embodiment, a deblurred pixel $\tilde{u}_r(i,j)$ in a deblurred frame can be computed by a weighted aggregation operation according to the below equation (equation 1):

$$\tilde{u}_r(i,j) = \sum_{p=1}^{\kappa} \sum_{q=1}^{\kappa} \frac{\omega_r(i,j)u_r(i+p,j+q) + \sum_n \omega_n(i,j)\,\hat{u}_n(i+p,j+q)}{\omega_r(i,j) + \sum_n \omega_n}$$

where:

- $\tilde{u}_r(i,j)$ is the deblurred pixel in the deblurred frame;
- $u_r(i,j)$ is the corresponding pixel (current pixel PX0) in the current frame;
- $\hat{u}_n(i,j)$ is the corresponding pixel PXn in a $n^{th}$ warped selected frame;
- k is the width and the height (kxk) of a patch (PA1 ... PAn, PA0) around the pixel $(i,j)$ in the current image (PA0) and the warped images (PA1 ... PAn);
- $\omega_r(i,j)$ and $\omega_n(i,j)$ are weighting parameters.

In the present embodiment:

- $\omega_r(i,j) = 1$;

$$\omega_n(i,j) = \left(\frac{b_n}{b_r}\right)^4 \left(\frac{1}{1 + d_n}\right)$$

-

where:

- $b_r$ is the average blur measure in the patch (kxk) around the current pixel in the current frame;
- $b_n$ is the average blur measure in the patch (kxk) around the corresponding pixel in the $n^{th}$ warped frame;
- $d_n$ is a Euclidean distance between the patch in the current frame and the corresponding patch in a $n^{th}$ warped frame.

The previous equation (equation 1) is applied on the blurred pixels of the current frame. Before that, as explained before, distances and blur measures of the patch have to be calculated. In this embodiment, the blur measures $b_r$ and $b_n$ can be computed by the following equations (equation 2, equation 3):

$$b_r = \frac{1}{\kappa^2} \sum_{p=1}^{\kappa} \sum_{q=1}^{\kappa} \mathcal{B}_r(i+p, j+q)$$

$$b_n = \frac{1}{\kappa^2} \sum_{p=1}^{\kappa} \sum_{q=1}^{\kappa} \widehat{\mathcal{B}}_n(i+p, j+q)$$

where:

- $\mathcal{B}_r(i,j)$ is the blur measure of a corresponding point in the local blur map of the current frame;

- $\widehat{\mathcal{B}}_{1\,n}(i,j)$ is the blur measure of a corresponding pixel in the warped local blur map of the nth selected frame.

The Euclidian distance $d_n$ can be computed by the following equation (equation 4):

$$d_n = \frac{1}{\kappa^2} \sum_{p=1}^{\kappa} \sum_{q=1}^{\kappa} (u_r(i+p, j+q) - \hat{u}_n(i+p, j+q))^2$$

where:

- $u_r(i,j)$ is the current pixel in the current frame.

5.2.2. Global bur measure

The goal of this procedure is to decide whether a neighbor has to be kept in the set of selected frame or not. It is then possible to select only frames which have a good index of sharpness (i.e. frames which are not too blurry). For computing this, a specific procedure is processed. In order to improve the speed of the deblur process, the integral image $u$ is processed. The procedure is done in horizontal and/or vertical directions, to get two measures: *Bh* and/or *Bv.* The final measure is simply (when the two measures are calculated):

$$\mathcal{B} = \max(\mathcal{B}_h, \mathcal{B}_v) \qquad \text{equation 5}$$

Let's denote u the original input image. First of all, the image is blurred in the chosen direction, to get a blurry image u :

$$\forall(i,j), \tilde{u}(i,j) = \frac{1}{2\kappa+1} \sum_{k=-\kappa}^{\kappa} u(i, j+k). \qquad \text{equation 6}$$

Then the gradient is computed in both u and $\tilde{u}$ in the chosen direction

$$\forall(i,j), Du(i,j) = |u(i, j+1) - u(i, j-1)|, \qquad \text{equation 7}$$

$$\forall(i,j), D\tilde{u}(i,j) = |\tilde{u}(i, j+1) - \tilde{u}(i, j-1)|. \qquad \text{equation 8}$$

In a less precise variant, it may be possible to calculate *Du(i, j) = |u(i, j) - u(i, j - 1)|* instead. However, this calculation is less accurate for curves. Equations 6 and/or 7 allow better narrowing of the curves.

Then one sums the gradient of the image *Su* and the variation of the gradients *Sv*. This variation is evaluated only on the absolute differences which have decreased. Let us denote:

$$v(i,j) = \begin{cases} Du(i,j) - D\tilde{u}(i,j) & \text{if} & Du(i,j) - D\tilde{u}(i,j) > 0 \\ \\ 0 & \text{otherwise} \end{cases}$$

then we get

$$Su = \sum_{i,j} Du(i,j) \qquad Sv = \sum_{i,j} v(i,j).$$

Finally, the result is normalized between [0, 1]

$$\mathcal{B}_h = \begin{cases} \dfrac{Su - Sv}{Su} & \text{if} & Su > 0 \\ \\ 1 & \text{otherwise} \end{cases}$$

Checking whether Su = 0 or not allows preventing computational problem for example for flat images. In an embodiment, the local blur metric is computed on the luminance channel, which is basically the average of the three channels and allows speeding the calculations. 5.2.3. Local blur measure

In this process, the goal is to evaluate, the more precisely as possible, the local blur in a given frame. That means that one try to evaluate the blurry portions of the frame. This is done by calculating a Multi-resolution Singular Value (MSV) local blur metric. The Multi-resolution Singular Value (MSV) local blur metric is principally based on the Singular Value Decomposition (SVD) of the image *u:*

$$u = \sum_{i=1}^{n} \lambda_i e_i$$

equation 9

where $\lambda i\,(1 \le i \le n)$ are the eigen values in decreasing order and the $ei\,(1 \le i \le n)$ are *rank-1* matrices called the eigen-images.

The idea is that the first most significant eigen-images encode low-frequency shape structures while less significant eigen-images encode the image details. Then, to reconstruct a very blurred image, one need only very few eigen-images. On the contrary, one need almost all eigen images to reconstruct a sharp image.

Furthermore for a blurred block, the high frequency details are lost much more significantly in comparison with its low frequency shape structures. Then only the high frequency of the image are studied, through a *Haar* wavelet transformation. On this high frequency sub-bands, the metric is the average singular value.

As the metric is local, pixel-wise, the description of the code stands for a patch of size $\kappa \times \kappa$ around the current pixel. Let's us denote by P the current patch.

$$\forall (i,j) \in [\![1, \frac{\kappa}{2}]\!]^2,$$

$$P_{lh}(i,j) = \frac{1}{2}\left(P(2i,2j) - P(2i,2j+1) + P(2i+1,2j) - P(2i+1,2j+1)\right)$$

$$P_{hl}(i,j) = \frac{1}{2}\left(P(2i,2j) + P(2i,2j+1) - P(2i+1,2j) - P(2i+1,2j+1)\right)$$

$$P_{hh}(i,j) \;=\; \frac{1}{2}\left(P(2i,2j) - P(2i,2j+1) - P(2i+1,2j) + P(2i+1,2j+1)\right)$$

Singular Values Decomposition

A SVD decomposition is applied on each sub-bands Ps to get the $\kappa$ singular values $\{\lambda si\}\,i$. Then the local metric associated to the patch P is

$$\mathcal{B}_P = \frac{2}{3\kappa} \sum_{s=1}^{3} \sum_{i=1}^{\kappa/2} \lambda_{s_i}$$

Metric Final on each pixel

As a metric is obtained for a whole patch, it has to be decided to which pixel this measure will be associated. As *the Haar* decomposition need a power of two side block, the patch can't be centered on one pixel. Then two solutions are possible:

- *BP* is associated to the top left pixel: the metric remains exactly local, but is shifted;
- *BP* is associated to all the pixels belonging to this patch: then one pixel has $\kappa^2$ measures, which are averaged at the end, to give a local measure associated to the pixel.

5.2.4. Local warping method

Warping an image from an example is a difficult task, generally based on motion estimation. Simple known methods may be applied, but they are usually used for a global motion. However, as soon as a precise warping is wanted two main issues rise:

- when the motion between both images is too complicated for the quadratic model;
- when locally the motion has not the same direction of the global motion.

In particular, when the wanting result are used for deblurring locally, one may need a more precise estimation. Therefore, it is proposed a fast local warping, which doesn't lead to motion estimation, but provides really good results in term of warping. The aim of this algorithm is to provide a warped image (or patch) which can be used after in other applications, such as deblurring.

The main idea of is to extract key points of interest in both images (current frame and selected frame), associate them and warp locally around those key points with a really simple motion estimation. Let's denote by *u1* the input reference image (current frame) and u2 the second input image (selected frame). The final result will consist of a locally warped image *w2* and a mask of valid pixels *m2.* The whole algorithm may be summarized as follows:

(1). A list of key points l1 and l2 is estimated over both images *u1* and *u2,* based on the *Shi-Tomasi Corner Detector,* by using, for example, an *OpenCv* function called *goodFeaturesToTrack;*

(2). Only key points belonging to both images are kept, and each key points of l1 are associated to a key point of l2. To achieve this result, an optical flow estimated by the *Lucas-Kanade* method is used. This method if for example provided by the *OpenCv* function *calcOpticalFlowPyrLK;*

(3). Only the key points that have an error value below a given threshold T are kept;

(4). For each pixel (i,j) in the reference image:

- A list of key points is built from points of l1 that belongs in a neighborhoods of size $\kappa \times \kappa$ around (i,j);
- If at least one key point belongs to this neighborhood, then a constant motion is estimated between points from l1 and l2;
- According to this motion, the corresponding pixels of u2 are interpolated inside the neighborhood around (i, j).

(4). A uniform aggregation of warped pixels is done for every pixel of the warped image. If a pixel has at least one estimation, then the corresponding mask will be set to one, otherwise the mask value will be set to zero, as well as the warped pixel.

At the end, a locally wrapped image is obtained and it is the result of local transformations which are applied to second image to fit with the reference image.

5.2.5. Device for deblurring video

The disclosure also proposes a device for deblurring a video. The device can be specifically designed for deblurring video or any electronic device comprising non-transitory computer readable medium and at least one processor configured by computer readable instructions stored in the non-transitory computer readable medium to implement any method in the disclosure.

According to an embodiment shown in figure 6., the device for deblurring a video includes a Central Processing Unit (CPU) 62, a Random Access Memory (RAM) 61, a Read-Only Memory (ROM) 63, a storage device which are connected via a bus in such a manner that they can carry out communication thereamong.

The CPU controls the entirety of the device by executing a program loaded in the RAM. The CPU also performs various functions by executing a program(s) (or an application(s)) loaded in the RAM.

The RAM stores various sorts of data and/or a program(s).

The ROM also stores various sorts of data and/or a program(s) (Pg).

The storage device, such as a hard disk drive, a SD card, a USB memory and so forth, also stores various sorts of data and/or a program(s).

The device performs the method for deblurring a video as a result of the CPU executing instructions written in a program(s) loaded in the RAM, the program(s) being read out from the ROM or the storage device and loaded in the RAM.

More specifically, the device can be a server, a computer, a pad, a smartphone or a camera.

The disclosure also relates to a computer program product comprising computer executable program code recorded on a computer readable non-transitory storage medium, the computer executable program code when executed, performing the method for deblurring a video. The computer program product can be recorded on a CD, a hard disk, a flash memory or any other suitable computer readable medium. It can also be downloaded from the Internet and installed in a device so as to deblur a video.

One embodiment of the described general aspects is a method 700 for deblurring a frame (FC) of a video, the video comprising a plurality of frames (F0... FX). The method comprises obtaining (10, 710), from the plurality of frames (F0... FX), a set of neighboring frames of the current frame wherein a global score of sharpness is greater than a predetermined sharpness threshold, called set of selected frames (FS0... FSX). The method further comprises, for at least one of the frames of the set of selected frames (FS0,... FSX) and for the current frame (FC), generating (20, 720) of a local blur map, delivering a local blur map of the at least one frame (LBM FS0... LBM FSX) and a local blur map of the current frame (LBMFC) and further comprises performing (30, 730) a local warping of the at least one frame of the set of selected frames (FS0,... FSX) and of the local blur map (LBM FS0... LBM FSX) associated with the at least one frame as a function of a local motion estimation between the current frame (FC) and the at least one frame of the set of selected frames (FS0,... FSX), delivering at least one locally warped frame (LWFS0,.. LWFSX) and an associated locally warped blur map (LWBM FS0... LWBM FSX). The method further comprises performing (40, 740) a weighted aggregation of a part of the at least one locally warped frame (LWFS0,.. LWFSX) and a corresponding part the current frame (FC), based on the at least one locally warped blur map and the local blur map of the current frame (LBMFC).

Another embodiment of the described general aspects is an apparatus 800 for deblurring a frame (FC) of a video, the video comprising a plurality of frames (F0... FX), said apparatus comprising at least one processor (810) and memory (820), wherein the at least one processor is configured to:

obtain (10), from the plurality of frames (F0... FX), a set of neighboring frames of the current frame wherein a global score of sharpness is greater than a predetermined sharpness threshold, called set of selected frames (FS0... FSX); for at least one of the frames of the set of selected frames (FS0,... FSX) and for the current frame (FC), generate (20) of a local blur map, delivering a local blur map of the at least one frame (LBM FS0... LBM FSX) and a local blur map of the current frame (LBMFC); perform(30) a local warping of the at least one frame of the set of selected frames (FS0,... FSX) and of the local blur map (LBM FS0... LBM FSX) associated with the at least one frame as a function of a local motion estimation between the current frame (FC) and the at least one frame of the set of selected frames (FS0,... FSX), providing at least one locally warped frame (LWFS0,.. LWFSX) and an associated locally warped blur map (LWBM FS0... LWBM FSX); perform (40) a weighted aggregation of a part of the at least one locally warped frame (LWFS0,.. LWFSX) and a corresponding part the current frame (FC), based on the at least one locally warped blur map and the local blur map of the current frame (LBMFC).

**Claims**

1. A method for deblurring a frame (FC) of a video, the video comprising a plurality of frames (F0... FX), said method comprising:

    - obtaining (10), from the plurality of frames (F0... FX), a set of neighboring frames of the current frame wherein a global score of sharpness is greater than a predetermined sharpness threshold, called set of selected frames (FS0... FSX);
    - for at least one of the frames of the set of selected frames (FS0,... FSX) and for the current frame (FC), generating (20) of a local blur map, delivering a local blur map of the at least one frame (LBM FS0... LBM FSX) and a local blur map of the current frame (LBMFC);
    - performing (30) a local warping of the at least one frame of the set of selected frames (FS0,... FSX) and of the local blur map (LBM FS0... LBM FSX) associated with the at least one frame as a function of a local motion estimation between the current frame (FC) and the at least one frame of the set of selected frames (FS0,... FSX), delivering at least one locally warped frame (LWFS0,.. LWFSX) and an associated locally warped blur map (LWBM FS0... LWBM FSX);
    - performing (40) a weighted aggregation of a part of the at least one locally warped frame (LWFS0,.. LWFSX) and a corresponding part the current frame (FC), based on the at least one locally warped blur map and the local blur map of the current frame (LBMFC).

2. An apparatus for deblurring a frame (FC) of a video, the video comprising a plurality of frames (F0... FX), said apparatus comprising at least one processor and memory, wherein the at least one processor is configured to:

    obtain (10), from the plurality of frames (F0... FX), a set of neighboring frames of the current frame wherein a global score of sharpness is greater than a predetermined sharpness threshold, called set of selected frames (FS0... FSX);
    for at least one of the frames of the set of selected frames (FS0,... FSX) and for the current frame (FC), generate (20) of a local blur map, delivering a local blur map of the at least one frame (LBM FS0... LBM FSX) and a local blur map of the current frame (LBMFC);
    perform(30) a local warping of the at least one frame of the set of selected frames (FS0,... FSX) and of the local blur map (LBM FS0... LBM FSX) associated with the at least one frame as a function of a local motion estimation between the current frame (FC) and the at least one frame of the set of selected frames (FS0,... FSX), providing at least one locally warped frame (LWFS0,.. LWFSX) and an associated locally warped blur map (LWBM FS0... LWBM FSX);
    perform (40) a weighted aggregation of a part of the at least one locally warped frame (LWFS0,.. LWFSX) and a corresponding part the current frame (FC), based on the at least one locally warped blur map and the local blur map of the current frame (LBMFC).

3. The method according to claim 1, or the apparatus according to claim 2 wherein the obtaining, from said plurality of frames, a set of neighboring frames of the current frame comprises:

    - obtaining (111) M neighbor frames of said current frame, M being a number greater or equal to one, delivering a set of preselected frames;
    - calculating (112) a global score of sharpness for each frame of the set of preselected frames;
    - from said set of preselected frames, obtaining (113) a set of selected frames comprising the frames that have global sharpness scores beyond a predetermined threshold value;

4. The method according to claim 1, or the apparatus according to claim 2 wherein performing the weight aggregation comprises:

    - obtaining a current pixel in the current frame;
    - obtaining a patch of a predetermined size around the current pixel;
    - calculating Euclidean distances between the patch in the current frame and a corresponding patch in said at least one locally warped frame;
    - calculating an average blur measure in a corresponding patch in the local blur map of the current frame and in the corresponding patch of the at least one locally warped blur map of the at least one frame;
    - aggregating the current pixel with weighted corresponding pixels in the locally warped frames as a function of the Euclidean distances of said patch and the average blur measure of said patch, delivering a deblurred pixel.

5. The method or the apparatus according to claim 4, wherein a Euclidean distance between the patch in the current frame and a corresponding patch in a n$^{th}$ warped frame is calculated as by:

$$d_n = \frac{1}{\kappa^2} \sum_{p=1}^{\kappa} \sum_{q=1}^{\kappa} (u_r(i+p, j+q) - \hat{u}_n(i+p, j+q))^2$$

where:

- $k$ is the width and the height of the patch ;
- $u_r(i,j)$ is the current pixel in the current frame,
- $\hat{u}_n(i,j)$ is the corresponding pixel in the n$^{th}$ warped selected frame;

6. The method or the apparatus according to claim 4, wherein the average blur measure of the corresponding patch in the local blur map of the current frame is calculated by:

$$b_r = \frac{1}{\kappa^2} \sum_{p=1}^{\kappa} \sum_{q=1}^{\kappa} \mathcal{B}_r(i+p, j+q)$$

in which $\mathcal{B}_r(i,j)$ is the blur measure of a corresponding point in the local blur map of the current frame ;

7. The method or the apparatus according to claim 4, wherein the average blur measure of the corresponding patch in the local blur map of the current frame is calculated by:

$$b_n = \frac{1}{\kappa^2} \sum_{p=1}^{\kappa} \sum_{q=1}^{\kappa} \widehat{\mathcal{B}}_n(i+p, j+q)$$

where:

- $\widehat{\mathcal{B}}_{1\,n}(i,j)$ is the blur measure of a corresponding pixel in the warped local blur map of the n$^{th}$ selected frame;

8. The method or the apparatus according to claim 4, wherein the deblurred pixel is calculated by:

$$\tilde{u}_r(i,j) = \sum_{p=1}^{\kappa} \sum_{q=1}^{\kappa} \frac{\omega_r(i,j) u_r(i+p, j+q) + \sum_n \omega_n(i,j)\, \hat{u}_n(i+p, j+q)}{\omega_r(i,j) + \sum_n \omega_n}$$

where:

- $\tilde{u}_r(i,j)$ is the deblurred current pixel ;
- $\omega_r(i,j)$ and $\omega_n(i,j)$ are weighing parameters,

$$\omega_r(i,j) = 1 \text{ and } \omega_n(i,j) = \left(\frac{b_n}{b_r}\right)^4 \left(\frac{1}{1+d_n}\right)$$

9. The method or the apparatus according to claim 3, wherein the M neighbor frames comprise the N previous frames of the current frame and the N next frames of the current frame, N greater or equal to 1.

10. The method according to claim 1 further comprising, or the apparatus according to claim 2 configured for filtering the local blur maps of the at least one frame and the current frame.

11. The method or the apparatus according to claim 3, wherein calculating of global score of sharpness is based on a luminance channel of the at least one frame and the current frame.

12. The method or the apparatus according to any preceding claim, wherein the video is a user generated video having a frame rate of 25 to 30 frames per second.

13. The method or the apparatus according to any preceding claim, wherein said video comprises information indicating burred frames and/or suspected burred frames in said video.

14. The method or the apparatus according to claim 13, wherein said information comprises accelerometer records and/or gyroscopic records of a video recording device on which said video has been recorded.

15. A non-transitory computer program product comprising computer executable program code recorded on a computer readable non-transitory storage medium, the computer executable program code when executed, performing a method according to any one of claims 1 and 3 to 13.

FO

FX

10

FSO

FSX

LBM
FSO

LBM
FSX

20

CF

LBM
CF

30

LW
FSO

LW
FSX

LWBM
FSO

LWBM
FSX

40

Figure 1

F1  F2

FC

Fn-1  Fn

Figure 3

M

M+1

| | F1 | F2 | ------- | FC | -------- | Fn-1 | Fn |

111

112

SS1 ---------- SSn

113

FS1 ------------ FSn

## Figure 2

62

I ⟶ UC ⟶ T

61

M ⟷ Pg

63

## Figure 6

Figure 4

Figure 5

701

710

720

730

740

Start

Obtain set of neighboring frames

Generating and delivery Blur maps

Generating and delivery of a local warping

Performing weighted aggregation

700

Figure 7

800

Processor

810

Memory

820

Figure 8

Europäisches Patentamt

European Patent Office

Office européen des brevets

# EUROPEAN SEARCH REPORT

Application Number

EP 16 30 6425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/257042 A1 (OFEK EYAL [CN] ET AL) 16 November 2006 (2006-11-16) | 1-3,9-15 | INV. G06T5/00 |
| A | * abstract * * paragraphs [0002], [0004] - [0006], [0059] - [0061], [0104] - [0111], [0125] * | 4-8 | |
| | ----- | | |
| X | EP 1 377 036 A2 (MICROSOFT CORP [US]) 2 January 2004 (2004-01-02) | 1-3,9-15 | |
| A | * paragraphs [0002], [0020], [0034] - [0037], [0046] * | 4-8 | |
| | ----- | | |

TECHNICAL FIELDS SEARCHED (IPC)

G06T

The present search report has been drawn up for all claims

| Place of search | Date of completion of the search | Examiner |
|---|---|---|
| Munich | 21 April 2017 | Eckert, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 30 6425

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2017

| Patent document cited in search report | | Publication date | Patent family member(s) | | Publication date |
|---|---|---|---|---|---|
| US 2006257042 | A1 | 16-11-2006 | NONE | | |
| EP 1377036 | A2 | 02-01-2004 | AT | 507675 T | 15-05-2011 |
| | | | EP | 1377036 A2 | 02-01-2004 |
| | | | EP | 2323372 A1 | 18-05-2011 |
| | | | US | 2004001705 A1 | 01-01-2004 |
| | | | US | 2006187342 A1 | 24-08-2006 |
| | | | US | 2006187346 A1 | 24-08-2006 |
| | | | US | 2006187359 A1 | 24-08-2006 |
| | | | US | 2006290821 A1 | 28-12-2006 |

EPO FORM P0459

For more details about this annex : see Official Journal of the European Patent Office, No. 12/82